# EUROPEAN PATENT APPLICATION

(11) **EP 1 895 384 A1**
(43) Date of publication of application: **05.03.2008**
(21) Application number: 06119910.5
(22) Date of filing: 31.08.2006
(51) Int. Cl.: G06F 1/16

(54) **Extensible portable multimedia player**

(71) Applicant: Inventec Multimedia & Telecom Corporation, Neihu District Taipei City (TW)
(72) Inventor: Huang, Chi-Neng, Taipei City (TW)
(74) Representative: Viering, Jentschura & Partner

(57) **Abstract**

A portable multimedia player (PMP) with extensible functions is provided, which is used to play audio-visual digital data that have already been retrieved and stored. Additionally, the PMP is provided with more functions, such as receiving a real-time audio-visual data through wireless transmission, or being used for shooting as a digital camera, or functioning as a cell phone, through plugging a function extension card therein.

## Description

### BACKGROUND OF THE INVENTION

### Field of Invention

The present invention relates to a portable multimedia player (PMP) used to play digital audio-visual data, and more particularly to a PMP, whose preset functions are extended by plugging a function extension card therein.

### Related Art

Since the MP3 digital walkman made "music" portable, information technology (IT) firms have begun to make "films" portable. A portable multimedia player (PMP) has appeared with the development of such an idea, such that self-made or downloaded pictures or films can be stored into a small and light player and be carried along, thereby to be enjoyed by oneself, as well as shared with others. A PMP must at least be capable of playing files with such formats as music, pictures, and films; recording sounds and images; functioning as a hard disk for storage (similar to a jet flash); and some types of PMPs may further read a memory card; and almost all information can be carried along. Since they emphasize that audio-visual data may be carried along with oneself, PMPs typically have a screen of 3.5 inches to meet the requirements of being light, thin, short, and small, which is more suitable for a work group or students who often commute, and they are also used to manufacture in-car audio-visual playing systems. It is a benefit not only for watching films and listening to music to kill time, but also for watching teaching films to learn foreign language, etc. However, a screen of 3.5 inches is after all unsuitable for long-time watching and is relatively harmful to one's eyesight. Thus, products with a screen of 7 inches have appeared in the field, which can be selected by individuals according to their specific demands.

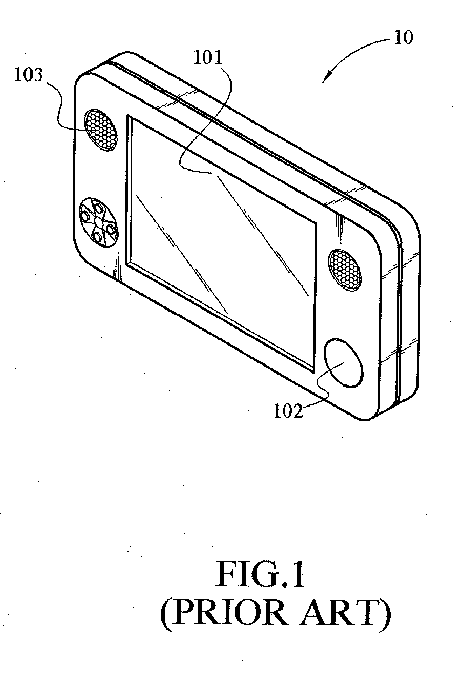

Referring to FIG. 1, it is a stereogram of the appearance of a conventional PMP. The PMP 10 includes at least one control key 102, a screen 101, and at least one loudspeaker 103. The control key 102 is used to operate various functions and settings of the PMP 10, the screen 101 is used to display images, and the loudspeaker 103 is used to play sounds.

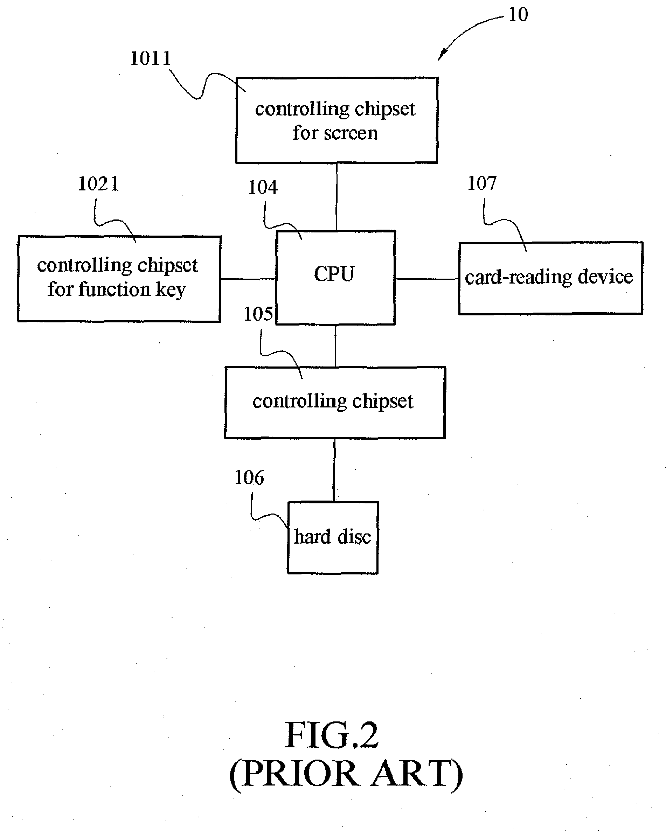

Referring to FIG. 2, it is a schematic view of functional construction of the conventional PMP. As shown in Fig. 2, the PMP includes a central processing unit (CPU) 104, a hard disk 106 for storing data, a controlling chipset 105 for controlling an operation of the hard disk 106, a controlling chipset 1021 for the control key, a controlling chipset 1011 for the screen and a card-reading device 107. Each of the chipsets is connected to and driven by the CPU 104. The card-reading device 107 is used for plugging an external interface card (or a memory card) with the same transmitting specification, so as to input the external data or to establish an information link with the external data. As shown in the figures, the conventional PMP 10 is mainly used to read and play the audio-visual data previously stored in a memory device, for example, a memory card, or previously transmitted and then stored in the hard disk 106, so that the conventional PMP 10 cannot display or receive real-time information. However, in accordance with the popularization of the current mobile communication devices, the PMP will be absolutely more practical if it can be used to receive and display real-time information. However, no products of this sort have been made available in the current market.

### SUMMARY OF THE INVENTION

In view of the above-mentioned problem, a main object of the present invention is to provide a portable multimedia player (PMP) capable of receiving and displaying real-time audio-visual information, such that the functions of the PMP are more suitable for practical use.

To achieve the aforementioned object, the present invention provides a PMP, wherein a card-reading device is set within the main body, and with different function-extension cards being plugged in, the PMP has much more relevant functions, for example, receiving a real-time audio-visual data through wireless transmission, or being used for a digital camera shooting, or functioning as a cell phone, and the like.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below for illustration only, and which thus is not limitative of the present invention, and wherein:
FIG. 1 is a stereogram of the appearance of a conventional PMP.
FIG. 2 is a schematic view of the functional construction of the conventional PMP.
FIG. 3 is a stereogram of the appearance of a PMP according to a first embodiment of the present invention.
FIG. 4 is a schematic view of the internal construction of the PMP according to the first embodiment.
FIG. 5 i s a schematic view a second embodiment of the present invention.
FIG. 6 is a diagram showing the completed construction of the second embodiment of the present invention.
FIG. 7 is a schematic view a third embodiment of the present invention.

### DETAILED DESCRIPTION OF THE INVENTION

To further understand the objects, constructions, features, and functions of the present invention, the present invention will be illustrated below in detail through the embodiments.

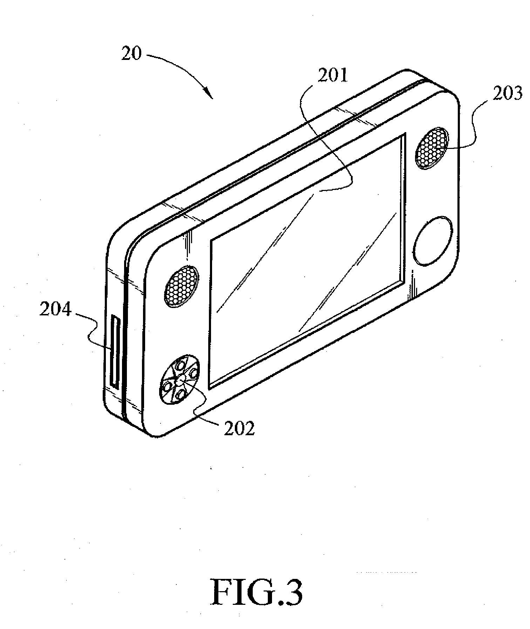

Referring to FIG. 3, it is a stereogram of the appearance of a PMP according to a first embodiment of the present invention. It can be known from the external appearance of the PMP 20 that it mainly has a screen 201, a set of control keys 202, a set of loudspeakers 203, and an interface card socket 204. The screen 201 is used for displaying image information. The set of control keys 202 are provided to enable a user to operate the PMP 20. The set of loudspeakers 203 are used for playing sound information. Furthermore, the interface card socket 204 is provided for a function-extension card to be plugged in, thereby achieving an information link with the PMP 20.

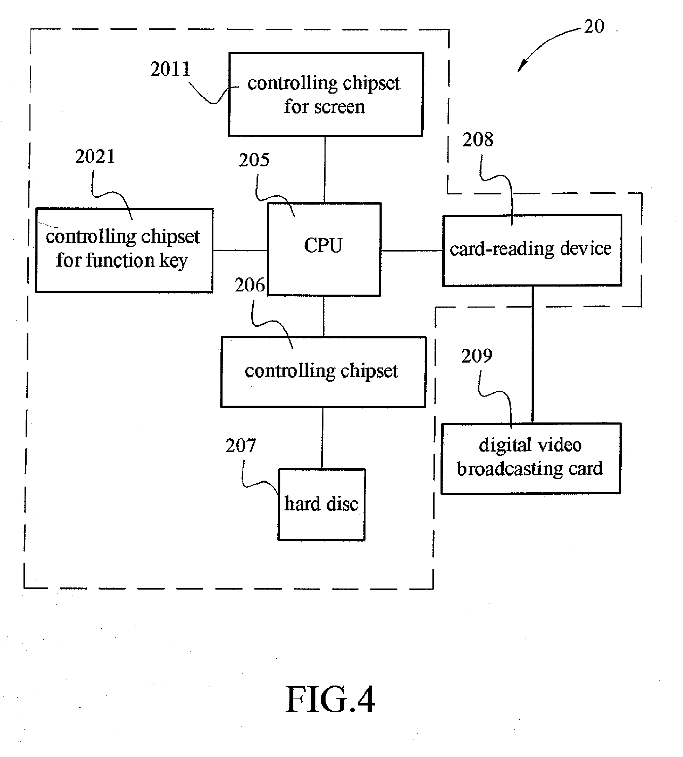

Referring to FIG. 4, it is a schematic view of the internal construction of the PMP 20 according to the present invention. As shown in FIG. 4, the PMP 20 comprises a central processing unit (CPU) 205, a hard disk 207 for storing data, a controlling chipset 206 for controlling the hard disk 207, a controlling chipset 2021 for the function key, a controlling chipset 2011 for the screen, and a card-reading device 208. Each of the elements is connected to and driven by the CPU 205. The card-reading device 208 is used for a digital video broadcasting card 209 (in DVB-T or DVB-H specification) to be plugged in, such that the PMP 20 is capable of receiving and displaying real-time audio-visual information, for example, TV program broadcasts, news, etc..

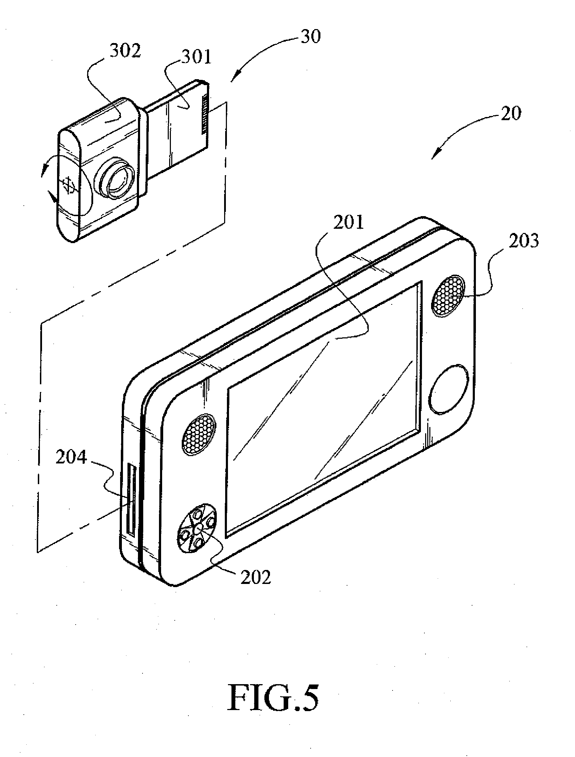

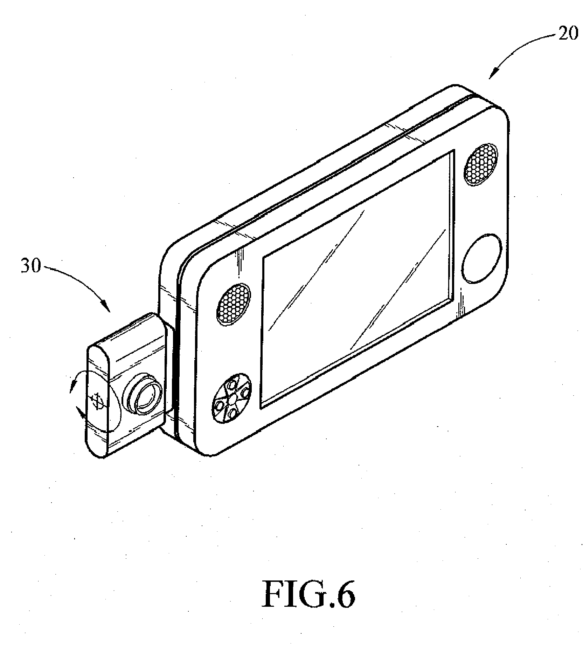

Referring to FIGs. 5 and 6, they show a second embodiment of the present invention. A PMP 20 has an interface card socket 204 for an interface-connection card 301 of an electronic device 30 to be plugged in to act as a function-extension card. This embodiment as shown in the figure is a digital camera 302 with an exposed interface-connection card 301. After the interface-connection card 301 is plugged in the interface card socket 204 of the PMP 20, an information link is established between the interface-connection card 301 and the interface card socket 204, that is, the digital camera 302 may use the screen 201 of the PMP 20 for viewing pictures before and after shooting, and so forth. Most electronic devices, such as global position systems (GPSs) and palm game machines, do not need a separate screen, but only an interface-connection card is required, such that an information link between the PMP 20 and the interface-connection card can be established.

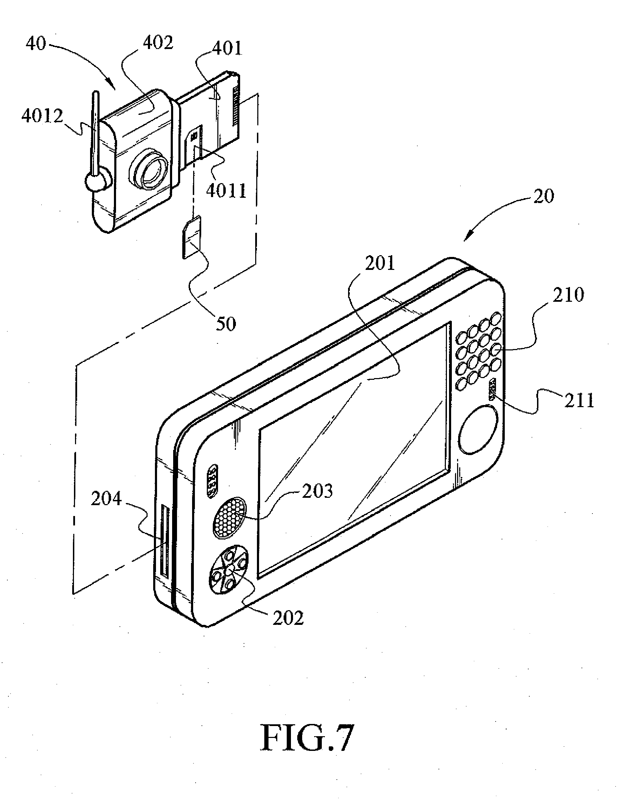

Referring to FIG. 7, it shows a third embodiment of the present invention. The interface-connection card 401 of a mobile communication device 40 acts as the function extension card for the interface card socket 204 of the PMP 20, such that the PMP 20 is provided with a mobile communication function. As shown in the figure, the interface-connection card 401 has a socket 4011 for a subscriber identity module card (SIM card) 50 to be disposed therein. The interface-connection card 401 is an interface card device used for mobile communication, and meanwhile it may be combined with a digital camera 402, and has an antenna 4012. The PMP 20 in this embodiment is used in cooperation with the communication device 40, and is further provided with a set of keys 210 for use (such as in dialing), and is further provided with a microphone 211 for receiving sounds.

It can be known from the above that, as for the PMP of the present invention, the functions are extended mainly through plugging different function extension cards into the interface card socket of the card-reading device, such that an information link can be established between the PMP and the corresponding electronic devices. Therefore, after being implemented, the PMP of the present invention is capable of receiving and displaying real-time audio-visual information, such that the functions of the PMP become more suitable for practical use.

## Claims

1. A portable multimedia player (PMP), used to read and play digital data in an audio-visual format, wherein:
the PMP has a card-reading device connected with a central processing unit of the PMP; and the card-reading device has an interface card socket for at least one function extension card to be plugged in, so as to extend the functions of the PMP.

2. The PMP as claimed in claim 1, wherein the function extension card is a digital video broadcasting card, such that the PMP receives and displays real-time digital information through wireless transmission.

3. The PMP as claimed in claim 1, wherein the function extension card is an interface-connection card for a digital camera, such that the PMP is used to display images for the digital camera during shooting and after shooting.

4. The PMP as claimed in claim 1, wherein the function extension card is an interface-connection card for a mobile communication device, such that the PMP is provided with a mobile communication function.

5. The PMP as claimed in claim 4, wherein the PMP is installed with a set of keys for dialing.

6. The PMP as claimed in claim 4, wherein the PMP is installed with a microphone.

7. The PMP as claimed in claim 4, wherein the interface-connection card is provided with a socket for a subscriber identity module (SIM) card to be plugged therein.

8. The PMP as claimed in claim 4, wherein the interface-connection card is provided with an antenna.
